# EUROPEAN PATENT SPECIFICATION

(11) **EP 2 117 814 B1**
(45) Date of publication and mention of the grant of the patent: **24.04.2013**
(21) Application number: 08701642.4
(22) Date of filing: 23.01.2008
(51) Int. Cl.: B29C 70/08, B29C 70/54, B64C 1/06

(54) **SHELL ELEMENT AS PART OF AN AIRCRAFT FUSELAGE**
MANTELELEMENT ALS TEIL EINES FLUGZEUGRUMPFS
ELEMENT COQUE CONSTITUANT UNE PARTIE D'UN FUSELAGE D'AERONEF

(30) Priority: 23.01.2007 DE 102007003275; 23.01.2007 US 897122 P
(43) Date of publication of application: 18.11.2009
(73) Proprietor: Airbus Operations GmbH, 21129 Hamburg (DE)
(72) Inventor: HERRMANN, Ralf, 27777 Ganderkesee (DE); DOLZINSKI, Wolf-Dietrich, 27777 Ganderkesee (DE); WENTZEL, Hans-Peter, 27305 Bruchhausen-Vilsen (DE); KOLAX, Michael, 21147 Hamburg (DE)
(74) Representative: Isarpatent
(86) International application number: PCT/EP2008/050760
(87) International publication number: WO 2008/090176

(56) References cited:
- EP-A- 1 145 828
- EP-A- 1 149 687
- WO-A2-2005/030462
- US-A- 4 633 632
- US-A1- 2004 130 072
- US-A1- 2006 251 847
- US-B1- 6 692 681

## Description

The present invention relates to an aircraft fuselage, the circumference of which is formed from shell elements, wherein each shell element is partially or completely of CRP construction. Examples of prior art are provided by US 2004/0130072 or US 2006/0251847.

The applicant knows that an aircraft fuselage can be produced by joining together a plurality of short fuselage barrels. In this case, the aircraft fuselage is integrated over its circumference. In a further alternative construction, the aircraft fuselage is constructed from fuselage shells. These have the advantage over fuselage barrels of being easier to manufacture and furthermore offering greater flexibility in the design of the fuselage.

Fuselage shells or fuselage barrels of this type, for large civil passenger and transport aircraft, are normally made from metal or a metal alloy. However, these metal fuselage shells or metal fuselage barrels have various drawbacks. In particular, the size of the fuselage shells or fuselage barrels is limited, for example by restrictions imposed by semi-finished products such as metal sheets, limitations in shaping tools or the size of chemical baths that are available for processing. Therefore, if metal fuselage shells are used, it is necessary for a relatively large number of smaller metal shells to be assembled into larger sections and ultimately into the fuselage. A further drawback is that the fuselage shells or fuselage barrels made from metal have a considerable weight.

The present invention is therefore based on the object to allow simple and inexpensive production of an aircraft fuselage and also permits an additional weight saving.

According to the invention, this object is by an aircraft fuselage having the features according to Claim 1, and also by an aircraft having the features according to Claim 13.

A first aspect of the present invention relates to the provision of an aircraft fuselage, the circumference of which is formed from shell elements which are integrated over the circumference and are attached to one another in a longitudinal direction, wherein each shell element is formed as a curved sheet-like element and is partially or completely produced as a CRP construction. This has the advantage that the shell element can easily and inexpensively be produced in any desired size. This is particularly advantageous compared to metal shell elements which, as has already been described above in connection with the prior art, are of limited dimensions. A further advantage is that the CRP construction can save weight compared to a metal shell element.

In one embodiment of the invention, at least the outer skin of at least one shell element is of CRP construction. The outer skin may in this case be formed as or include a laminate. The laminate preferably has one or more layers of a CRP material and may additionally be provided, for example, with at least one layer of a GRP and/or ARP material. The CRP construction of the outer skin has the advantage that considerable weight can be saved as a result compared to a comparable outer skin made from metal as used in the prior art.

In the invention, each shell element has a length in a range from 10m to at least 60m and its length is adapted in such a manner that, in an aircraft, it extends from behind the cockpit as far as the rear pressure bulkhead.

This has the advantage over the fuselage barrels and fuselage shells that are known from the prior art that a large number of these previous fuselage barrels and fuselage shells which are required to form an aircraft fuselage can be combined in the form of shell elements according to the invention. It is in this way possible to save considerable costs, since there is no need to then join the large number of individual elements. Furthermore, forces can be better absorbed by the shell element according to the invention, since only a small number of shell elements have to be attached to one another in the longitudinal direction to form a fuselage compared, for example, to the known fuselage barrels with their transverse seams. An aircraft fuselage may, for example, be formed from two, three, four or five shell elements, which are integrated over the circumference and are attached to one another in the longitudinal direction.

In another embodiment of the invention, at least one shell element at least partially or completely is of monolithic CRP construction, hybrid CRP construction and/or sandwich CRP construction. In the case of the sandwich construction, by way of example a core is arranged between two CRP skins. The sandwich construction has the advantage that the shell element has a higher rigidity than in the case of the conventional monolithic construction.

In one embodiment of the invention, in the sandwich structure the core provided may, for example, be a honeycomb structure and/or another suitable reinforcing structure which is composed, for example, of panels and/or profiled sections, which can form suitable supporting structures or struts. This has the advantage of allowing a shell element with a high stability to be formed. The core material used in this case may be fibre-reinforced plastics, such as for example CRP, GRP or ARP, as well as plastic foams, wax paper, such as for example Nomex paper, and/or suitable metal alloys, such as for example aluminum, steel and/or titanium alloys.

In a further embodiment of the invention, the structure of at least one shell element can be varied in the longitudinal and/or width direction, for example in terms of its strength, rigidity, its thickness, its fibre orientation in the case of fibre-reinforced materials such as CRP, ARP or GRP and/or its material or materials. The structure of the shell element is in this case varied in respect of differing thicknesses on the side of the shell element facing towards the cabin. A shell element of this type has the advantage that it can be adapted to a very wide range of loads which can occur in different regions of the shell element. For example, the shell element can be reinforced in regions in which particularly high stresses occur, for example in the region where the wings meet the body. A further advantage is that the shell elements are easily accessible compared to fuselage barrels for example if individual regions need to be of increased thickness, since the outer side of the shell element lies in a mould whereas the inner side, which faces the aircraft interior, is uncovered and thus can be individually worked on. If fuselage barrels made from CRP materials were to be produced instead of the shell elements, they would have to be provided with a core to which the CRP material is applied. Consequently, a variation for example in the material thickness would have to be correspondingly incorporated in the core in order to prevent the fuselage barrels from subsequently having a non uniform structure on their outer sides. However, this involves considerable work and additional costs.

In a further embodiment of the invention, at least one shell element may either be directly provided with cut-outs, for example for windows or doors, or these cut-outs can subsequently be cut out of the shell element, for example by laser means. Subsequent cutting of the cut-outs out of the shell element has the advantage of being particularly inexpensive in terms of production.

Further aspects of the present invention relate to an aircraft having an aircraft fuselage of this type.

The invention is explained in more detail below on the basis of exemplary embodiments and with reference to the accompanying figures, in which:
- Fig. 1: shows a perspective, diagrammatic view of a shell construction using metal shells; and
- Fig. 2: shows a perspective diagrammatic view of an aircraft with a fuselage made up of shell elements according to the invention.

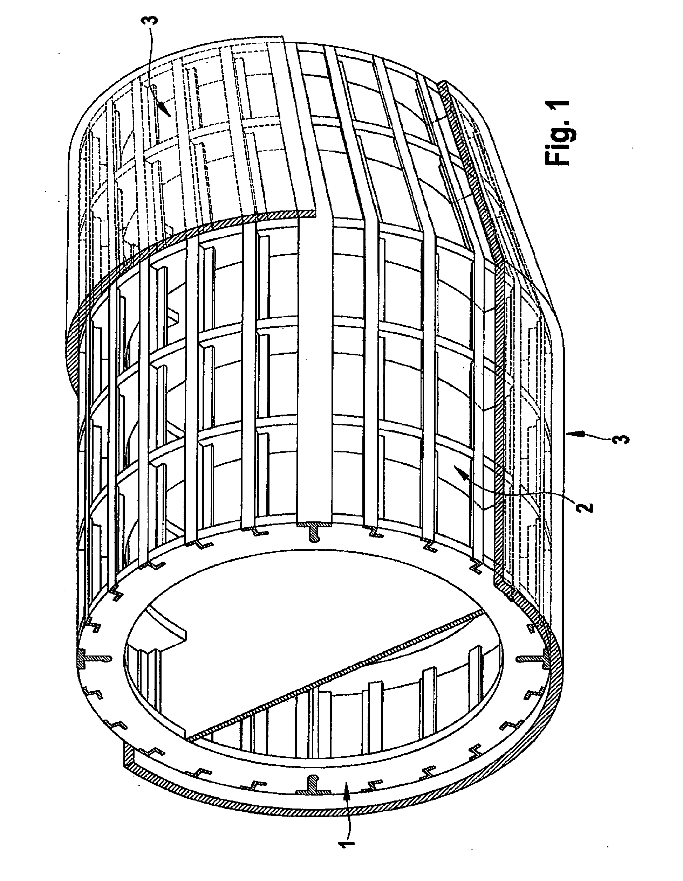

Fig. 1 diagrammatically depicts a fuselage construction of monocoque construction, wherein metal panelling parts 3 are attached to a grid of frames 2. Here, relatively large numbers of smaller metal shells have to be attached to the frame grid and a plurality of such fuselage barrels 1 have to be subsequently assembled to form a fuselage, with the fuselage barrels 1 being attached to one another via transverse joints.

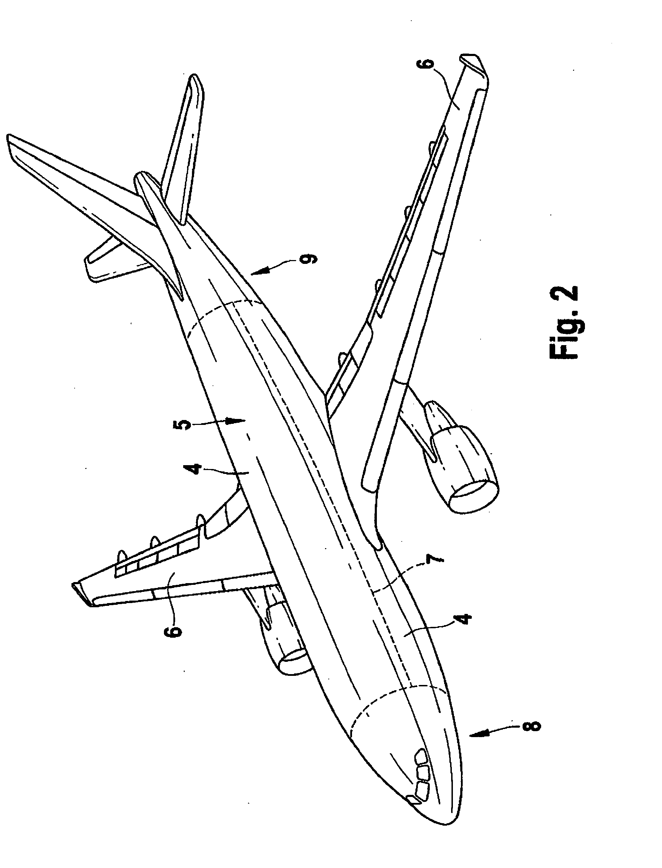

By contrast, the aircraft fuselage according to the invention is formed from at least two long shell elements 4, as illustrated in greatly simplified form in Fig. 2, wherein the position of the shell elements 4 so as to construct the fuselage is likewise only diagrammatically indicated. The number and position of the shell elements 4 can be varied as desired for example according to function, aircraft type, etc., and is not restricted to the highly simplified illustration in Fig. 2.

The shell elements 4 are of CRP construction and can be joined to one another in the longitudinal direction for example conventionally by means of rivets (not shown), to mention just one of numerous possible attachment options. The CRP construction has the advantage over metal shell elements that the shell elements 4 can in principle be produced in any desired dimensions or sizes, since CRP materials can be purchased and used as an endless semi-finished product, as it were.

Numerous processes for manufacturing CRP composite parts are generally known. Therefore, just a few examples of such processes will be mentioned below. In the autoclave process, the process of curing the resin-impregnated mat (for example prepregs) takes place in the autoclave. Standard prepregs have a resin content of approx. 40%. If honeycombs are used, socalled adhesive prepregs (increased resin content) are used as a direct connection to the honeycomb, in order to ensure wetting of the honeycomb without depletion of the laminate. A further process is resin transfer moulding (RTM). This is a resin injection process. Also known is the single-line injection (SLI) process. In the SLI process, unlike the conventional RTM process which uses two mould halves, the forces for compacting the fibre material are not applied mechanically by a huge tool, but rather via a relatively flexible mould half using autoclave pressure. Also known is the lamination process, which involves providing a mould which forms the subsequent component surface and alternately applying thin resin layers to fibre mats. A process of this type is used for producing the shell elements of the aircraft fuselage according to the invention. Also known is the fibre spraying process, which uses a fibre spray gun. In this process, resin, curative, accelerator and long fibres are mixed and applied to a mould. This process can likewise be used to produce the shell elements of the aircraft fuselage according to the invention. Cold pressing or hot pressing are also generally known. In this case, prepregs or fibre-reinforced resin moulding compounds are pressed either cold or at elevated temperature to form components.

For example, in addition to a monolithic construction the shell element 4 may also have a CRP/metal hybrid construction. In this case, the fuselage skin may consist of a CRP material and stringers and/or frames may consist of metal or a metal alloy. If the stringers or frames are made from a metal or a metal alloy which leads to galvanic corrosion on contact with CRP and an electrolyte, suitable protective measures must be taken to prevent corrosion, for example the use of glass fibre mats or tedlar sheets between CRP components and metal components and the use of suitable attachment means, which are made for example from nonconductive material or are encapsulated with GRP or the shank of which is provided with a sleeve made from a nonconductive material.

The shell element 4 may optionally also have a sandwich construction, in which, for example, at least one core is inserted between two CRP skins (not shown) or between two CRP laminates. The core (not shown) may in this case for example have a honeycomb structure or a foamed structure or for example be assembled from panels and/or profiled sections. The core material may in this case consist of at least one fibre-reinforced plastic, such as for example CRP, GRP and/or ARP, a plastic foam, wax paper, such as for example Nomex paper, and/or a metal alloy, such as for example an aluminium, steel and/or titanium alloy.

The structure of the shell element 4 can also be varied in the longitudinal and/or width direction. This has the advantage that areas or regions of the shell element 4 can be individually adapted to the loads that are acting there. Normally, not all regions of an aircraft fuselage are exposed to identical loads or loads of the same magnitude; for example, the region of the fuselage 5 which meets the wings 6 and the rear region of the fuselage 5 are more heavily loaded than other regions of the aircraft fuselage. To correspondingly adapt the shell element 4, the shell element 4 may, for example, be formed with regions of differing thickness, depending on the magnitude or type of loading or the forces which are active. Furthermore, if fibre-reinforced materials are used, their fibre orientation can be varied in different regions of the shell element 4, for example as a function of the loads and forces that occur there. Furthermore, it is also conceivable to vary the material, so that different materials can be used or combined with one another in regions of the shell element 4. By way of example, it is conceivable to use particularly stable or load-resistant materials in regions that are exposed to particularly high levels of load, whereas other, less load-resistant materials can be used in other regions that are less highly loaded. It is in this way also possible to suitably adapt the strength and/or rigidity of individual regions of the shell element 4.

The variation in the structure of the shell element 4 can be realized not only to take account of forces and loads that occur but also as a function of numerous other factors, including weight saving and economic factors. One advantage here is that the outer side of the shell element 4 can be held in a mould or holder (not shown) while the inner side is exposed and therefore readily accessible. It is in this way possible, for example, for fibre-reinforced material to very easily be applied in different fibre directions and thicknesses to the shell element 4 without, for example, having to previously incorporate thickness changes in a core that is subsequently surrounded by the fibre-reinforced material. Furthermore, it is also possible to use different cores which vary in terms of material and/or construction in a sandwich construction. Cores of this type can easily be used on the shell element 4, since the shell element 4 is completely accessible from its inner side, unlike the described ring elements with a core.

The technology according to the invention of very long fibre-reinforced fuselage shells 4 can reduce the number of shells required, with corresponding joins, by approx. 80% compared to current metal technology. The long shell elements 4 have the advantage that their joining via longitudinal seams 7 allows better transfer of load than transverse seams as occur when joining fuselage barrels. In principle, the great length of the shell elements 4 according to the invention alone allows better load transfer to be achieved, since very many fewer seams and transitions are present compared to a multiplicity of fuselage barrels which have to be joined to one another in order to form the fuselage and consequently have a large number of transverse seams and form a large number of transitions.

The shell elements 4 can be produced in any desired dimensions. For example, the shell element 4 may have any length, width and thickness. In particular, according to the invention, the shell element 4 has a length of 10-15m or of 10m to 20m, of 20m to 25m, or of 20m to 30m, of 30m to 35m or of 30m to 40m, of 40m to 45m or of 40m to 50m, of 50m to 55m or of 50m to 60m and greater. All intermediate values within these ranges are also included.

The specific length of the shell element 4 is dependent on the particular aircraft and is individually defined. The same is also true of the width and thickness of the shell elements 4. The shell element 4 according to the invention extends from behind the cockpit 8 as far as the rear pressure bulkhead 9 and a fuselage may, for example, be made up over its circumference of 2, 3, 4, 5 or more shell elements 4.

According to the prior art, as illustrated for example in Fig. 1, depending on the aircraft there are 4, 5 or more transverse joints or transverse seams between the tubular fuselage sections, which had initially been assembled from smaller shells. By contrast, the invention can reduce the number of transverse joints in the typical fuselage region to 0 or 1 in the case of extremely long aircraft. The nose and tail can remain as separate parts and be joined to the fuselage.

The invention provides an aircraft fuselage of fibre composite or hybrid, integral construction, in which the number of shell elements that has hitherto been required is minimized by the fact that the extent and function of these elements can be combined in a small number of now very long and single-part fuselage shells 4, so that the number of transverse joints required can be reduced.

The CRP construction and the reduction in the number of joins allows considerable weight to be saved and the production costs to be reduced. Integration is one of the ways of controlling costs of the CRP construction to make it economic. The invention makes it easier to achieve economic objectives with pure CRP constructions and hybrid constructions, in which, for example, the fuselage panelling is constructed from a CRP material and frames and/or stringers are made from metal or a metal alloy.

The invention provides a single component, in this case the shell element 4, where previously a large number of components had to be used. This also eliminates the joins that were previously required. This in turn considerably relieves the manufacturing processes and simplifies logistics and process control. The range of production means and manufacturing equipment can be reduced and simplified. Furthermore, it is possible to achieve simplifications in the assembly and fitting through the drastic reduction in the number of components. In detail, the size of the components also involves procedural changes which, however, are in no way a compensatory factor. Compared to a construction for example of CRP fuselage barrels, it is possible to significantly minimize manufacturing risk and to achieve a higher flexibility in change of design and/or materials.

Furthermore, the fuselage structure according to the invention allow weight savings, cost savings and accelerations in throughput times compared to the previous shell split.

Compared to the production of CRP fuselage barrels, in addition to the advantage of reduced production risk, there is the further advantage that less outlay is required on production means and equipment and, moreover, the learning curves are more favourable. Further technical developments, local design changes, learning effects, alternative materials are also much easier to implement, since, for example, there is no need to provide a core to which the CRP material is applied in order to form a fuselage barrel. Fuselage barrels of this type are produced, for example, by a winding process, in which reinforcing fibres are wound around a rotating core, which disadvantageously, depending on the geometry, remains in the component or is removed from it again.

Although the present invention has been described above on the basis of preferred exemplary embodiments, it is not restricted thereto, but rather can be modified in numerous ways.

### List of reference designations

- 1: Fuselage barrel
- 2: Frame
- 3: Panelling
- 4: Shell element
- 5: Fuselage
- 6: Wing
- 7: Longitudinal seam
- 8: Cockpit
- 9: Rear pressure bulkhead

## Claims

1. An aircraft fuselage, the circumference of which is formed from shell elements (4) which are integrated over the circumference and are attached to one another in a longitudinal direction, wherein each shell element (4) is formed as a curved sheet-like element and is at least partially or completely of CRP construction, wherein at least the thickness of at least one shell element (4) is variable over the width and/or length of the shell element (4) on the side of the shell element (4) facing towards the cabin, wherein the length of each shell element (4) extends starting from behind the cockpit (8) as far as the rear pressure bulkhead (9) and wherein each shell element (4) has a length in a range from 10m to at least 60m and wherein each shell element (4) is manufactured by a lamination process or by a fibre spraying process.

2. Aircraft fuselage according to Claim 1, **characterized in that** at least the outer skin of the at least one shell element (4) is produced completely as a CRP construction.

3. Aircraft fuselage according to Claim 1 or 2, **characterized in that** each shell element (4) has a length in a range from 35m to at least 60m.

4. Aircraft fuselage according to at least one of the preceding claims, **characterized in that** the at least one shell element (4) at least partially is of monolithic CRP construction and/or hybrid CRP construction.

5. Aircraft fuselage according to at least one of the preceding claims, **characterized in that** the at least one shell element (4) at least partially is of sandwich CRP construction.

6. Aircraft fuselage according to Claim 5, **characterized in that** in the sandwich CRP construction at least one core is arranged between two CRP skins.

7. Aircraft fuselage according to Claim 6, **characterized in that** the core has a honeycomb structure or a reinforcing structure which is composed of panels and/or profiled sections.

8. Aircraft fuselage according to Claim 7, **characterized in that** the core includes a fibre-reinforced plastic, a plastic foam, wax paper and/or a metal alloy.

9. Aircraft fuselage according to at least one of Claims 6 to 8, wherein cores are arranged between two CRP skins which vary in terms of material and/or construction.

10. Aircraft fuselage according to at least one of the preceding claims, **characterized in that** the fibre orientation, the strength, the rigidity and/or the material of the at least one shell element (4) is variable over the width and/or length of the shell element (4).

11. Shell element according to at least one of the preceding claims, **characterized in that** cut-outs for windows or doors are provided in the at least one shell element (4) and are shaped out or cut out by laser means.

12. Aircraft fuselage according to any of Claims 1 to 11, **characterized in that** the circumference of the aircraft fuselage is formed from two, three, four or five shell elements (4).

13. Aircraft having an aircraft fuselage according to at least one of Claims 1 to 12.

## Patentansprüche

1. Flugzeugrumpf, dessen Umfang aus Außenhautelementen (4) gebildet wird, die über den Umfang integriert sind und in einer Längsrichtung aneinander befestigt sind, wobei jedes Außenhautelement (4) als ein gekrümmtes bahnartiges Element ausgebildet ist und mindestens teilweise oder vollständig eine CFK-Bauweise verkörpert, wobei mindestens die Dicke von mindestens einem Außenhautelement (4) über die Breite und/oder Länge des Außenhautelements (4) auf der Seite des Außenhautelements (4), die der Kabine zugewandt ist, variabel ist, wobei sich die Länge jedes Außenhautelements (4) vom Ende des Cockpits (8) bis zum hinteren Druckschott (9) erstreckt, und wobei jedes Außenhautelement (4) eine Länge in einem Bereich von 10 m bis mindestens 60 m aufweist, und wobei jedes Außenhautelement (4) durch einen Laminierungsprozess oder durch einen Fasersprühprozess hergestellt wird.

2. Flugzeugrumpf nach Anspruch 1, **dadurch gekennzeichnet, dass** mindestens die äußere Haut des mindestens einen Außenhautelements (4) vollständig als eine CFK-Bauweise hergestellt wird.

3. Flugzeugrumpf nach Anspruch 1 oder 2, **dadurch gekennzeichnet, dass** jedes Außenhautelement (4) eine Länge in einem Bereich von 35 m bis mindestens 60 m aufweist.

4. Flugzeugrumpf nach mindestens einem der vorhergehenden Ansprüche, **dadurch gekennzeichnet, dass** das mindestens eine Außenhautelement (4) mindestens teilweise aus monolithischer CFK-Bauweise und/oder hybrider CFK-Bauweise besteht.

5. Flugzeugrumpf nach mindestens einem der vorhergehenden Ansprüche, **dadurch gekennzeichnet, dass** das mindestens eine Außenhautelement (4) mindestens teilweise aus einer Sandwich-CFK-Bauweise besteht.

6. Flugzeugrumpf nach Anspruch 5, **dadurch gekennzeichnet, dass** in der Sandwich-CFK-Bauweise mindestens ein Kern zwischen zwei CFK-Häuten angeordnet ist.

7. Flugzeugrumpf nach Anspruch 6, **dadurch gekennzeichnet, dass** der Kern eine Wabenstruktur oder eine Verstärkungsstruktur aufweist, die aus Paneelen und/oder profilierten Sektionen besteht.

8. Flugzeugrumpf nach Anspruch 7, **dadurch gekennzeichnet, dass** der Kern einen faserverstärkten Kunststoff, einen Kunststoffschaum, Wachspapier und/oder eine Metalllegierung enthält.

9. Flugzeugrumpf nach mindestens einem der Ansprüche 6 bis 8, wobei Kerne zwischen zwei CFK-Häuten angeordnet sind, die hinsichtlich Material und/oder Bauweise variieren.

10. Flugzeugrumpf nach mindestens einem der vorhergehenden Ansprüche, **dadurch gekennzeichnet, dass** die Faserausrichtung, die Festigkeit, die Steifigkeit und/oder das Material des mindestens einen Außenhautelements (4) über die Breite und/oder Länge des Außenhautelements (4) variabel ist.

11. Außenhautelement nach mindestens einem der vorhergehenden Ansprüche, **dadurch gekennzeichnet, dass** Ausschnitte für Fenster oder Türen in dem mindestens einen Außenhautelement (4) vorhanden sind und mit Hilfe eines Lasermittel ausgeformt oder ausgeschnitten werden.

12. Flugzeugrumpf nach einen der Ansprüche 1 bis 11, **dadurch gekennzeichnet, dass** der Umfang des Flugzeugrumpfes aus zwei, drei, vier oder fünf Außenhautelementen (4) gebildet ist.

13. Flugzeug mit einem Flugzeugrumpf nach mindestens einem der Ansprüche 1 bis 12.

## Revendications

1. Fuselage d'aéronef, dont la circonférence est formée d'éléments de coque (4) qui sont intégrés sur la circonférence et sont reliés entre eux dans une direction longitudinale, dans lequel chaque élément de coque (4) se présente sous la forme d'un élément de type tôle incurvée et est au moins partiellement ou complètement réalisé à partir de PRFC, dans lequel au moins l'épaisseur d'au moins un élément de coque (4) est variable sur la largeur et/ou la longueur de l'élément de coque (4) sur le côté de l'élément de coque (4) faisant face à la cabine, dans lequel la longueur de chaque élément de coque (4) s'étend depuis l'arrière de la cabine de pilotage (8) jusqu'à la cloison de pressurisation arrière (9) et dans lequel chaque élément de coque (4) a une longueur située entre 10 m et au moins 60 m et dans lequel chaque élément de coque (4) est réalisé selon un procédé de laminage ou un procédé de pulvérisation de fibre.

2. Fuselage d'aéronef selon 1a revendication 1, **caractérisé par le fait qu'**au moins la peau extérieure de l'au moins un élément de coque (4) est complètement réalisée à partir de PRFC.

3. Fuselage d'aéronef selon la revendication 1 ou 2, **caractérisé par le fait que** chaque élément de coque (4) a une longueur située entre 35 m et au moins 60 m.

4. Fuselage d'aéronef selon au moins l'une des revendications précédentes, **caractérisé par le fait que** l'au moins un élément de coque (4) est au moins partiellement réalisé à partir de PRFC monolithique et/ou de PRFC hybride.

5. Fuselage d'aéronef selon au moins l'une des revendications précédentes, **caractérisé par le fait que** l'au moins un élément de coque (4) est au moins partiellement ou complètement réalisé à partir de PRFC de type sandwich.

6. Fuselage d'aéronef selon la revendication 5, **caractérisé par le fait que**, dans la structure en PRFC de type sandwich, au moins un noyau est disposé entre les deux peaux en PRFC.

7. Fuselage d'aéronef selon la revendication 6, **caractérisé par le fait que** le noyau a un structure en nid d'abeille ou un structure renforcée qui est composée de panneaux et/ou de sections profilées.

8. Fuselage d'aéronef selon la revendication 7, **caractérisé par le fait que** le noyau comprend un plastique renforcé par des fibres, une mousse en plastique, du papier paraffiné et/ou un alliage de métal.

9. Fuselage d'aéronef selon au moins l'une des revendications 6 à 8, dans lequel des noyaux sont disposés entre deux peaux en PRFC qui varient en terme de matériau et/ou de structure.

10. Fuselage d'aéronef selon au moins l'une des revendications précédentes, **caractérisé par le fait que** l'orientation de la fibre, la résistance, la rigidité et/ou le matériau de l'au moins un élément de coque (4) est variable sur la largeur et/ou la longueur de l'élément de coque (4).

11. Elément de coque selon au moins l'une des revendications précédentes, **caractérisé par le fait que** des découpes pour les hublots ou les portes sont fournis dans l'au moins un élément de coque (4) et sont taillées ou découpées au laser.

12. Fuselage d'aéronef selon l'une quelconque des revendications 1 à 11, **caractérisé par le fait que** la circonférence du fuselage d'aéronef est formée de deux, trois, quatre ou cinq éléments de coque (4).

13. Aéronef ayant un fuselage d'aéronef selon au moins l'une des revendications 1 à 12.
